# EUROPEAN PATENT SPECIFICATION

(11) **EP 0 468 746 B1**
(45) Date of publication and mention of the grant of the patent: **01.10.1997**
(21) Application number: 91306699.9
(22) Date of filing: 23.07.1991
(51) Int. Cl.: H04N 5/93

(54) **Video Signal reproducing apparatus**
Vorrichtung zur Wiedergabe eines Videosignals
Dispositif de reproduction vidéo

(30) Priority: 24.07.1990 JP 197211/90
(43) Date of publication of application: 29.01.1992
(73) Proprietor: SONY CORPORATION, Tokyo 141 (JP)
(72) Inventor: Suda, Motoharu, c/o Patents Division, Shinagawa-ku, Tokyo 141 (JP)
(74) Representative: Cotter, Ivan John

(56) References cited:
- EP-A- 0 360 413
- DE-A- 2 646 899
- DE-A- 3 928 374
- US-A- 4 296 434
- US-A- 4 845 557
- US-A- 4 862 259
- PATENT ABSTRACTS OF JAPAN vol. 011, no. 138 (E-503)2 May 1987 & JP-A-61 277 284

## Description

This invention relates to a video signal reproducing apparatus by which slow motion pictures are reproduced.

In NTSC television signals, 30 frame pictures are transmitted every second by sending 60 interlaced field pictures per second, each formed by 262.5 scanning lines.

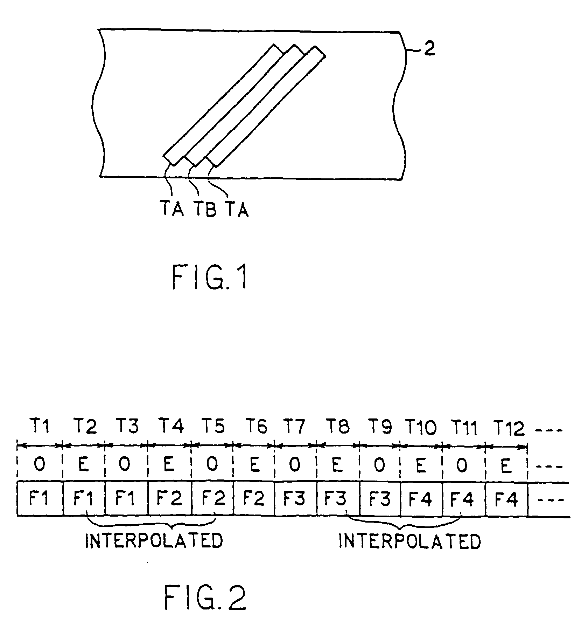

When such video signals are supplied to a video tape recorder (VTR), tracks TA, TB, ... are formed on a magnetic tape 2 as illustrated in Figure 1, one field of video signals being recorded in one track. Where a slow motion picture is to be reproduced by transporting the magnetic tape 2 at low speed, one field of video signals are reproduced in a magnetic field period (for example, a period of 3 fields in 1/3 speed reproduction) as shown in Figure 2 to produce the slow motion picture.

There are various methods of doing this. For example, a reproduction magnetic head can be moved in the direction perpendicular to the record tracks so that it positively traces one of the record tracks, or one field of video signal can be sampled from a reproduced signal stored a memory, without moving the head, etc.

Video signals of odd and even fields of the slow motion picture are formed by interpolating one field of video signals which have been read from track TA or TB.

Video signals of the odd or even field may, for example, be formed by delaying video signals of the previous field and vertically shifting them by one scanning line to form the next field picture. However, this technique causes vertical vibrations since the same picture appears twice.

To solve this problem, an interpolation filter may be used in the vertical direction. For example, video signals which have been read from the field memory are outputted as an odd field without change, and in the subsequent even field, video signals for the even field are formed by interpolating video signals of the odd field, read from the field memory, through the interpolation filter.

However, the resolution varies periodically because there are cases where the reproduced fields do correspond correctly to the even or odd field (that is, where the original field picture is outputted without change, or where the original field picture is interpolated). This results in flicker or jitter due to a high frequency component in the vertical direction. This is particularly conspicuous in still picture portions.

To overcome this, two kinds of video signals differing in height due to interlacing are formed on the basis of video signals read from the field memory, and are outputted as video signals of even and odd fields. But, in this case also, there is the problem that periodical jitter in the vertical direction occurs in still picture portions.

The same problems occur in other types of VTR. In so-called segment recording type VTRs in which one field of video signal is recorded on a plurality of record tracks, the same problems as described above occur in slow motion reproduction. They also occur in analogue recording VTRs in which analogue video signals are modulated to FM signals to be recorded, and in digital video recording VTRs in which digital video signals are encoded into coded signals to be recorded.

European Patent Application EP-A-0360413 discloses a slow motion video generation system that selects between temporal and spatial interpolation between fields depending upon whether the portion of the image is still or moving.

According to the present invention there is provided a video signal reproduction apparatus in which slow motion reproduction signals of video signals are obtained by lower speed transport of a magnetic record medium, on which the video signals are recorded, than the speed on recording, the apparatus comprising:
a first field memory for storing one field of reproduced even field picture data of said video signals;
a second field memory for storing one field of reproduced odd field picture data of said video signals;
an interpolation means for producing picture data to interpolate fields corresponding to even/odd fields of a reference video signal from the picture data stored in said first and/or second field memory; a detection means for detecting still picture portions and moving picture portions of the picture data which are stored in said first and second field memories; and
first selection means for selecting the output signal of said interpolation means if the output of said detection means represents said moving picture portions; characterised in that
said first selection means selects the output signal of said first or second field memory if the output of said detection means represents said still picture portions; and characterised by
second selection means for selecting one of the outputs of said first and second field memories in dependence on the even/odd properties of said reference video signal, to directly supply the selected signal to one of the inputs of said first selection means, wherein said slow motion reproduction signals identical with the even/odd properties of fields of the reference video signal are obtained from the output of said first selection means.

According to the present invention there is also provided apparatus according to claim 1 wherein said detection means detects, for each pixel, moving portions between the picture data stored in said first field memory and the picture data stored in said second field memory, and selectively outputs a signal representative of said still picture portions or said moving picture portions for each pixel.

An embodiment of the present invention comprises a video signal reproducing apparatus which comprises a first field memory for storing one field of picture data whenever the reproduction track is switched to a recording track of an odd field; a second field memory for storing one field of picture data whenever the reproduction track is switched to a recording track of an even field; first selection means for selecting and outputting the picture data stored in the first or second field memory according to an odd field scanning period or an even field scanning period; motion detection means for detecting a moving picture portion on the basis of picture data signals outputted from the first and second field memories; and second selection means for selecting between the reproduced output signal outputted from the first selection means and interpolated signals for outputting as video output signals, the interpolated signals being formed by interpolating picture data stored in the first and/or second field memories. When the motion detection means detects a still picture portion, the reproduced output signals outputted from the first selection means are outputted as the video output signals from the second selection means, and when a moving picture is detected, interpolated signals are outputted as the video output signals from the second selection means.

When reproduced output signals which correspond to the moving picture portion are outputted, the picture data which have been produced by interpolating picture data in the first or second field memory are outputted through the second selection means. On the other hand, when reproduced output signals which correspond to the still picture portion are outputted, the first selection means is switched. This causes picture data read from the first field memory to be outputted through the second selection means during the odd field scanning period, whereas during the even field scanning period picture data read from the second fixed memory are outputted through the second selection means. Thus, the field picture data which are primarily to be outputted in the still picture portion in the slow motion reproduction can be reproduced, and thereby the resolution of the slow motion picture is markedly enhanced.

The invention will now be described by way of example with reference to the accompanying drawings, throughout which like parts are referred to by like references, and in which:
Figure 1 is a diagram showing recording tracks on a magnetic tape;
Figure 2 is a time chart;
Figure 3 is a block diagram illustrating one embodiment of the video signal reproducing apparatus according to the present invention;
Figures 4A to 4C are diagrams illustrating motion detection;
   and
Figures 5A and 5B are time charts.

In the following description the embodiment comprises a VTR in which one field of video signal is recorded on one recording track, but the present invention is not limited to this, and may be applied to any VTR in which one field of reproduction signal is obtained in slow motion reproduction.

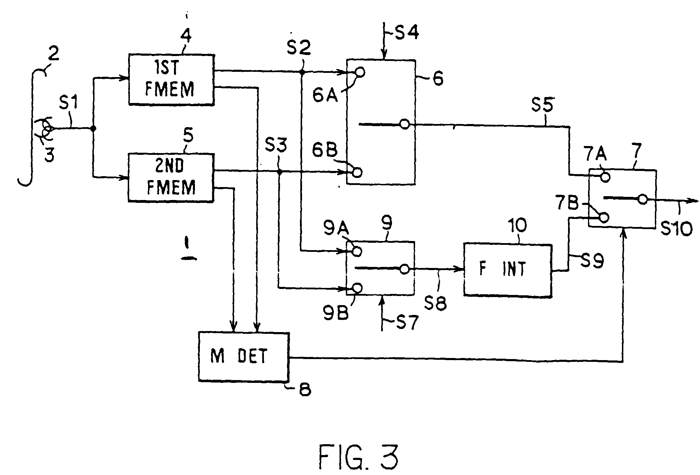

Referring to Figure 3, in a VTR 1, when a magnetic tape 2 is transported forward at a tape speed corresponding to a slow motion reproduction mode, reproduced video signals S1 which have been read out from a track TA or TB through a magnetic head 3 are stored in a first field memory 4 and a second field memory 5 corresponding to video signals of odd and even fields, respectively.

The first field memory 4 and the second field memory 5 read out picture data stored in them at a predetermined clock timing, and feed the data as picture data signals S2 and S3 to input terminals 6A and 6B respectively of a still picture portion switch circuit 6.

The still switch circuit 6 is switched by an even/odd field switch signal S4 at the timing of odd and even field scanning periods of slow motion reproduced pictures. At the timing of outputting of the reproduced picture of the odd field, picture data signals S3 of an odd field O are sent as a still picture reproduction signal S5 from the first field memory to the input terminal 7A of a switch control circuit 7, whereas at the timing of outputting of the reproduced picture of an even field, picture data signals S2 of the even field E are sent out from the second field memory 5.

The picture data stored in the first field memory 4 and the second field memory 5 are sequentially read out and supplied to a motion detection circuit 8 and input terminals 9A and 9B of a moving picture portion switch circuit 9.

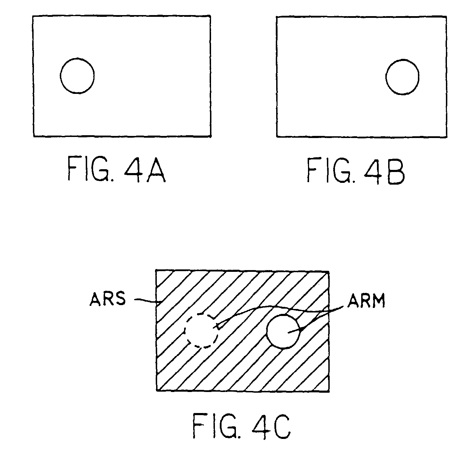

As shown in Figures 4A to 4C, a field picture (Figure 4A) of an odd field, and a field picture (Figure 4B) of an even field are inputted to the motion detection circuit 8, the former having been read from the first memory 4 and the latter having been read from the second field memory 5. On the basis of such picture data signals S2 and S3, a still picture portion ARS (shown by hatching in Figure 4C) and a moving picture ARM (surrounded by the solid and broken lines in Figure 4C) are distinguished, to provide a still picture portion/moving picture portion switch signal S6 to the switch control circuit 7, so that the input terminal is switched to the 7A side for the still picture portion and to the 7B side for the moving picture portion.

The moving switch circuit 9 is controlled to be switched on the basis of a field memory switch signal S7, which is inputted at field period timing, so that the input terminal is switched from 9A to 9B or from 9B to 9A with predetermined timing determined according to the slow motion reproduction mode, for example, for reading every three fields of data in 1/3 speed reproduction mode. Picture data signals S2 or S3 of odd or even field O or E stored in the first or second field memory 4 or 5 are fed as moving picture signals S8 to a field interpolation circuit 10.

The field interpolation circuit 10 approximates sequentially inputted moving picture signals S8 to data which are different in height due to interlacing to correspond to the even or odd scanning period of a reference video signal (that is, 1/2 of the horizontal period) and then feeds the resulting data as a moving picture reproduction signal S9 to the input terminal 7B of the switch control circuit 7.

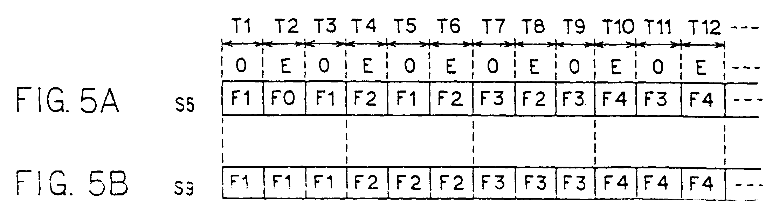

The operation of the switch control circuit 7 is switched on the basis of the still picture portion/moving picture portion switch signal S6 inputted from the motion detection circuit 8. When a still picture portion is to be reproduced, the still picture reproduction signal S5 (Figure 5A) are outputted as reproduced output signals S10, whereas when a moving picture portion is to be produced, the moving picture data signals S9 (Figure 5B) are outputted.

When in the foregoing construction the user commands, for example, the 1/3 speed reproduction mode as a slow motion reproduction mode, the VTR 1 transports the magnetic tape 2 at low speed, and reads out two adjacent fields of picture data, which form one frame of a picture, from tracks TA, TB, ..., so that the data are read and held in the first field memory 4 or the second field memory 5 as the magnetic head 3 switches from an odd field O to an even field E (or from an even field E to an odd field 0).

Supposing that a first field F1 (odd field) and a zero field F0 (even field) are respectively stored in the first field memory 4 and the second field memory 5, the motion detection circuit 8 judges for each pixel of such first field F1 and zero field F0 whether the picture data of the first and zero field F1 and F0 represent a still picture portion or a moving picture portion, and supplies the still picture portion/moving picture portion switch signal S6.

In the case where motion is not detected from the signals of the field F1 and the zero field F0, that is, a picture of the hatched portion of the Figure 4C is read, the input terminal of the switch control circuit 7 is switched to the input terminal 7A on the basis of the still picture portion/moving picture portion switch signal S6.

The input terminals 6A and 6B of the still picture portion switch circuit 6 are switched by the even/odd field switch signal S4 which is a signal representative of the even/odd field of a reference video signal. The input terminals 6A and 6B of the still picture portion switch circuit 6 are switched by the even/odd field switch signal S4 so that the even/odd of the field of the reproduced output signals S10 is identical with the even/odd of the field of the reference video signal. During the period T1, for example, picture data of the first field F1 are outputted from the first field memory 4 to the switch control circuit 7 through the input terminal 6A (Figure 5A).

During the subsequent period T2 which is an even field scanning period, instead of normal interpolation signals of the first field F1 (Figure 2) picture data of zero field F0 which precede the first field F1 by one field is outputted from the second field memory 5 through the input terminal 6B and the switch control circuit 7.

During the subsequent period T3 which is an odd field scanning period, the still picture portion switch circuit 6 outputs picture data of the first field F1 from the first field memory through the switch control circuit 7 as in the case of the period T1.

In the case of reproducing still picture portions ARS during periods (T4-T6), (T7-T9), ..., the switch control circuit 7 reads alternately picture data stored in the first field memory 4 and the second field memory 5, on the basis of whether the period is an even field scanning period (T4, T6, T8, ...) or an odd field scanning period (T5, T7, T9, ...) as in periods T1-T3, and outputs (F2, F1, F2), (F3, F4, F3), ... as reproduced output signals S10.

On the other hand, in the case where during the period T1 a motion is detected from the first field F1 and the zero field F0 which are read from the first field memory 4 and the second field memory 5 (that is, in the case where the picture data of areas surrounded by the solid and broken lines are read), the input terminal of the switch control circuit 7 is switched to the motion picture input terminal 7B on the basis of still picture portion/moving picture portion switch signal S6.

During the periods T1-T3, for example, moving picture reproduction signal S9 are fed to the motion picture input terminal 7B of the switch control circuit 7 through the moving circuit 9 of which input terminals 9A and 9B are switched every three field periods, and are set out as reproduced output signals S10 from the switch control circuit 7, the moving picture interpolation signal S9 having been produced by interpolating field F1, stored in the first field memory 4, for each of odd field scanning periods T1, T3 and even field scanning period T2.

During the subsequent periods T4-T6, in the case where a motion is detected between the first field F1 and the second field F2, the switch control circuit 7 outputs moving picture reproduction signal S9 as reproduced output signals S10, the moving picture reproduction signal S9 having been produced by interpolating the second field F2, stored in the second field memory 5, as in the case during periods T1-T3. Similarly, for periods (T7-T9), (T13-T15), ... and (T10-T1), (T16-T18), ..., picture data F3, F5, ... and F2, F4, ... stored in the first field memory 4 and the second field memory 5 are sequentially outputted through the interpolation filter, respectively.

When a still picture portion ARS is detected in the slow motion reproduction mode in the foregoing construction, odd field data and even field data are respectively read out from the first field memory 4 and the second field memory 5 according to whether the period is an odd field scanning period or an even field scanning period, and are outputted from the still picture switch circuit 6. This means that in the still picture portion ARS of field pictures which primarily form one frame are sequentially outputted and reproduced, and thereby slow motion pictures with remarkably high picture quality can be obtained.

In the foregoing embodiment, it is stated that the 1/3 speed reproduction mode is adopted as the slow motion reproduction mode, but the invention is applicable to slow motion reproduction other than 1/3 reproduction.

In the embodiment above, reproduced still picture signal S5 and moving picture reproduction signal S9 are outputted as reproduced output signals S10 of the still picture portion ARS and the moving picture portion ARM in the switched manner, respectively. The present invention is however not limited to this, and mixed signals which have reproduced still picture signal S5 and reproduced motion picture signals S9 weighted in the moving picture portion ARM and the still picture portion ARS respectively may be outputted as reproduced output signals 10. In this way, it is possible to make the switching between moving and still picture portions less conspicuous.

## Claims

1. A video signal reproduction apparatus in which slow motion reproduction signals of video signals are obtained by lower speed transport of a magnetic record medium (2), on which the video signals are recorded, than the speed on recording, the apparatus comprising:
a first field memory (4) for storing one field of reproduced even field picture data of said video signals;
a second field memory (5) for storing one field of reproduced odd field picture data of said video signals;
an interpolation means (10) for producing picture data to interpolate fields corresponding to even/odd fields of a reference video signal from the picture data stored in said first and/or second field memory (4, 5);
a detection means (8) for detecting still picture portions and moving picture portions of the picture data which are stored in said first and second field memories (4, 5); and
first selection means (7) for selecting the output signal of said interpolation means (10) if the output of said detection means (8) represents said moving picture portions; characterised in that
said first selection means selects the output signal of said first or second field memory (4, 5) if the output of said detection means (8) represents said still picture portions; and characterised by
second selection means (6) for selecting one of the outputs of said first and second field memories (4, 5) in dependence on the even/odd properties of said reference video signal, to directly supply the selected signal to one of the inputs of said first selection means (7), wherein said slow motion reproduction signals identical with the even/odd properties of fields of the reference video signal are obtained from the output of said first selection means (7).

2. Apparatus according to claim 1 wherein said detection means (8) detects, for each pixel, moving portions between the picture data stored in said first field memory (4) and the picture data stored in said second field memory (5), and selectively outputs a signal representative of said still picture portions or said moving picture portions for each pixel.

3. A video signal processing apparatus in which slow motion video signals are produced from a reproduction video signal obtained by lower speed transport of a magnetic record medium (2), on which video signals are recorded, than the speed on recording, the apparatus comprising:
a first field memory (4) for storing one field of reproduced even field picture data of said video signal;
a second field memory (5) for storing one field of reproduced odd field picture data of said video signal;
an interpolation means (10) for producing picture data to interpolate fields corresponding to even/odd properties of fields of a reference video signal from the picture data stored in said first and/or second field memory (4, 5);
a detection means (8) for detecting still picture portions and moving picture portions of the picture data which are stored in said first and second field memories (4, 5); and
first selection means (7) for selecting the output signal of said interpolation means (10) if the output of said detection means (8) represents said moving picture portions; characterised in that
said first selection means selects the output signal of said first or second field memory (4, 5) if the output of said detection means (8) represents said still picture portions, and characterised by
second selection means (6) for selecting one of the outputs of said first and second field memories (4, 5) in dependence on a signal (S4) representative of the even/odd properties of said reference video signal, to directly supply the selected signal to one of the inputs of said first selection means (7), wherein said slow motion video signal identical with the even/odd properties of fields of the reference video signal is obtained as the output of said first selection means (7).

4. Apparatus according to claim 4 wherein said detection means (8) detects for each pixel, moving portions between the picture data stored in said first field memory (4) and the picture data stored in said second field memory (5), and selectively outputs a signal representative of said still picture portions or said moving picture portions.

## Patentansprüche

1. Videosignal-Wiedergabevorrichtung, in der Zeitlupe-Wiedergabesignale von Videosignalen durch einen Transport eines magnetischen Aufzeichnungsmediums (2), auf dem die Videosignale aufgezeichnet sind, mit einer geringeren Geschwindigkeit als die Aufzeichnungsgeschwindigkeit erhalten werden, mit:
einem ersten Halbbildspeicher (4) zum Speichern eines Halbbildes von wiedergegebenen geradzahligen Halbbild-Bilddaten der Videosignale,
einem zweiten Halbbildspeicher (5) zum Speichern eines Halbbildes von wiedergegebenen ungeradzahligen Halbbilddaten des Videosignales,
einen Interpolationseinrichtung (10) zum Erzeugen von Bilddaten, um geradzahligen/ungeradzahligen Halbbildern entsprechende Halbbilder eines Referenzvideosignales, aus den in dem ersten und/oder zweiten Halbbildspeicher (4, 5) gespeicherten Bilddaten zu interpolieren,
einer Detektionseinrichtung (8) zum Detektieren stillstehender Bildabschnitte und sich bewegender Bildabschnitte der Bilddaten, die in dem ersten und dem zweiten Halbbildspeicher (4, 5) gespeichert sind, und
einer ersten Auswahleinrichtung (7) zum Auswählen des Ausgangssignales der Interpolationseinrichtung (10), wenn der Ausgang der Detektionseinrichtung (8) die sich bewegenden Bildabschnitte repräsentiert,
**dadurch gekennzeichnet,**
daß die erste Auswahleinrichtung das Ausgangssignal des ersten oder des zweiten Halbbildspeichers (4, 5) auswählt, wenn der Ausgang der Detektionseinrichtung (8) die stillstehenden Bildabschnitte repräsentiert, und gekennzeichnet durch eine zweite Auswahleinrichtung (6) zum Auswählen von einem der Ausgänge des ersten und des zweiten Halbbildspeichers (4, 5) abhängig von den Geradzahligkeits-/Ungeradzahligkeitseigenschaften des Referenzvideosignales, um das ausgewählte Signal direkt einem der Eingänge der ersten Auswahleinrichtung (7) zuzuführen, wobei die mit den Geradzahligkeits-/Ungeradzahligkeitseigenschaften von Halbbildern des Referenzvideosignales identischen Zeitlupe-Wiedergabesignale aus dem Ausgang der ersten Auswahleinrichtung (7) erhalten werden.

2. Vorrichtung gemäß Anspruch 1,
wobei die Detektionseinrichtung (7) für jeden Bildpunkt sich bewegende Abschnitte zwischen den in dem ersten Halbbildspeicher (4) gespeicherten Daten und den in dem zweiten Halbbildspeicher (5) gespeicherten Bilddaten detektiert und selektiv ein Signal ausgibt, daß für die stillstehenden Bildabschnitte oder die sich bewegenden Bildabschnitte für jeden Bildpunkt repräsentativ ist.

3. Videosignal-Verarbeitungsvorrichtung, in der Zeitlupe-Videosignale aus einem Wiedergabe-Videosignal erzeugt werden, das durch den Transport eines magnetischen Aufzeichnungsmediums (2), auf dem Videosignale aufgezeichnet sind, mit einer geringeren Geschwindigkeit als die Aufzeichnungsgeschwindigkeit erhalten wurde, mit:
einem ersten Halbbildspeicher (4) zum Speichern eines Halbbildes von wiedergegebenen geradzahligen Halbbild-Bilddaten des Videosignales,
einem zweiten Halbbildspeicher (5) zum Speichern eines Halbbildes von wiedergegebenen ungeradzahligen Halbbild-Bilddaten des Videosignales,
einer Interpolationseinrichtung (10) zum Erzeugen von Bilddaten, um Geradzahligkeits-/Ungeradzahligkeitseigenschaften von Halbbildern entsprechende Halbbilder eines Referenzvideosignales, aus den in dem ersten und/oder zweiten Halbbildspeicher (4, 5) gespeicherten Bilddaten zu interpolieren,
einer Detektionseinrichtung (8) zum Detektieren stillstehender Bildabschnitte und sich bewegender Bildabschnitte in den in dem ersten und dem zweiten Halbbildspeicher (4, 5) gespeicherten Bilddaten, und
einer ersten Auswahleinrichtung (7) zum Auswählen des Ausgangssignales der Interpolationseinrichtung (10), wenn der Ausgang der Detektionseinrichtung (8) die sich bewegenden Bildabschnitte repräsentiert,
**dadurch gekennzeichnet,**
daß die erste Auswahleinrichtung das Ausgangssignal des ersten oder des zweiten Halbbildspeichers (4, 5) auswählt, wenn der Ausgang der Detektionseinrichtung (8) die stillstehenden Bildabschnitte repräsentiert, und gekennzeichnet durch eine zweite Auswahleinrichtung (6) zum Auswählen von einem der Ausgänge des ersten und des zweiten Halbbildspeichers (4, 5) abhängig von einem Signal (S4), daß für die Geradzahligkeits-/Ungeradzahligkeitseigenschaften des Referenzvideosignales repräsentativ ist, um das ausgewählte Signal direkt einem der Eingänge der ersten Auswahleinrichtung (7) zuzuführen, wobei das mit den Geradzahligkeits-/Ungeradzahligkeitseigenschaften von Halbbildern des Referenzvideosignales identische Zeitlupe-Videosignal als Ausgang der ersten Auswahleinrichtung (7) erhalten wird.

4. Vorrichtung gemäß Anspruch 3,
wobei die Detektionseinrichtung (8) für jeden Bildpunkt sich bewegende Bildabschnitte zwischen den in dem ersten Halbbildspeicher (4) gespeicherten Bilddaten und den in dem zweiten Halbbildspeicher (5) gespeicherten Bilddaten detektiert und selektiv ein Signal ausgibt, das für die stillstehenden Bildsignalabschnitte oder die sich bewegende Bildabschnitte repräsentativ ist.

## Revendications

1. Appareil de reproduction de signal vidéo dans lequel des signaux de reproduction au ralenti de signaux vidéo sont obtenus par un défilement à vitesse plus lente d'un support d'enregistrement magnétique (2), sur lequel les signaux vidéo sont enregistrés, que la vitesse d'enregistrement, l'appareil comprenant :
une première mémoire de trame (4) pour stocker une trame de données d'image de trame paire reproduite desdits signaux vidéo ;
une seconde mémoire de trame (5) pour stocker une trame des données d'image de trame impaire reproduite desdits signaux vidéo ;
un moyen d'interpolation (10) pour produire des données d'image pour interpoler des trames correspondant aux trames paires/impaires d'un siqnal vidéo de référence à partir des données d'image stockées dans lesdites première et/ou seconde mémoires de trame (4, 5) ;
un moyen de détection (8) pour détecter des parties d'image fixe et des parties d'image de mouvement de données d'image qui sont stockées dans lesdites première et seconde mémoires de trame (4, 5) ; et
un premier moyen de sélection (7) pour sélectionner le signal de sortie dudit moyen d'interpolation (10) si la sortie dudit moyen de détection (8) représente lesdites parties d'image de mouvement ; caractérisé en ce que ledit premier moyen de sélection sélectionne le signal de sortie de ladite première ou seconde mémoire de trame (4, 5) si la sortie dudit moyen de détection (8) représente lesdites parties d'image fixe ; et caractérisé par
un second moyen de sélection (6) pour sélectionner une des sorties desdites première et seconde mémoires de trame (4, 5) en fonction des propriétés de parité/imparité dudit signal vidéo de référence, pour fournir directement le signal sélectionné à une des entrées dudit premier moyen de sélection (7), où lesdits signaux de reproduction au ralenti identiques aux propriétés de parité/imparité des trames du signal vidéo de référence sont obtenus à partir de la sortie dudit premier moyen de sélection (7).

2. Appareil selon la revendication 1, dans lequel ledit moyen de détection (8) détecte, pour chaque pixel, des parties de mouvement entre les données d'image stockées dans ladite première mémoire de trame (4) et les données d'image stockées dans ladite seconde mémoire de trame (5), et fournit sélectivement un signal représentatif desdites parties d'image fixe ou desdites parties d'image de mouvement pour chaque pixel.

3. Appareil de reproduction de signal vidéo dans lequel des signaux vidéo de ralenti sont produits à partir d'un signal vidéo de reproduction obtenu par le défilement à vitesse plus lente d'un support d'enregistrement magnétique (2), sur lequel des signaux vidéo sont enregistrés, que la vitesse d'enregistrement, l'appareil comprenant :
une première mémoire de trame (4) pour stocker une trame de données d'image de trame paire reproduite dudit signal vidéo ;
une seconde mémoire de trame (5) pour stocker une trame des données d'image de trame impaire reproduite dudit signal vidéo ;
un moyen d'interpolation (10) pour produire des données d'image pour interpoler des trames correspondant aux propriétés de parité/imparité des trames d'un signal vidéo de référence à partir des données d'image stockées dans lesdites première et/ou seconde mémoires de trame (4, 5) ;
un moyen de détection (8) pour détecter des parties d'image fixe et des parties d'image mobile de données d'image qui sont stockées dans lesdites première et seconde mémoires de trame (4, 5) ; et
un premier moyen de sélection (7) pour sélectionner le signal de sortie dudit moyen d'interpolation (10) si la sortie dudit moyen de détection (8) représente lesdites parties d'image de mouvement ; caractérisé en ce que ledit premier moyen de sélection sélectionne le signal de sortie de ladite première ou seconde mémoire de trame (4, 5) si la sortie dudit moyen de détection (8) représente lesdites parties d'image fixe, et caractérisé par un second moyen de sélection (6) pour sélectionner une des sorties desdites première et seconde mémoires de trame (4, 5) selon qu'un signal (S4) représentatif des propriétés de parité/imparité dudit signal vidéo de référence, pour fournir directement le signal sélectionné à une des entrées dudit premier moyen de sélection (7), dans lequel ledit signal vidéo de ralenti identique aux propriétés de parité/imparité des trames du signal vidéo de référence est obtenu comme sortie dudit premier moyen de sélection (7).

4. Appareil selon la revendication 3 dans lequel ledit moyen de détection (8) détecte pour chaque pixel, les parties de mouvement entre les données d'image stockées dans ladite première mémoire de trame (4) et les données d'image stockées dans ladite seconde mémoire de trame (5), et fournit sélectivement un signal représentatif desdites parties d'image fixe ou desdites parties d'image de mouvement.
